# EUROPEAN PATENT SPECIFICATION

(11) **EP 4 463 381 B1**
(45) Date of publication and mention of the grant of the patent: **01.10.2025**
(21) Application number: 22800335.6
(22) Date of filing: 17.10.2022
(51) Int. Cl.: B25J 9/16, B65B 5/02, G05B 19/418, B65G 61/00, B65G 57/20, B65G 57/03, B65B 57/14, B65B 35/54, B65B 35/50, B65B 35/40, B65B 35/38, B65B 35/18, B65B 5/10

(54) **BOXING MACHINE**
SCHACHTELFÜLLMASCHINE
MACHINE DE REMPLISSAGE DE BOÎTES

(30) Priority: 19.10.2021 GB 202114889; 13.10.2022 GB 202215070
(43) Date of publication of application: 20.11.2024
(73) Proprietor: Gripple Automation Limited, Sheffield, South Yorkshire S13 9LU (GB)
(72) Inventor: SINCLAIR, Ashley, Sheffield South Yorkshire S13 9LU (GB); BEARDSMORE, Darren, Sheffield South Yorkshire S13 9LU (GB)
(86) International application number: PCT/IB2022/059931
(87) International publication number: WO 2023/067469

(56) References cited:
- EP-A1- 0 734 948
- US-A- 5 727 365
- US-A1- 2019 084 701

## Description

### FIELD OF THE INVENTION

Embodiments of the present invention relate to a boxing machine. In particular, but not exclusively, they relate to a boxing machine for inserting multiple products into boxes.

### BACKGROUND TO THE INVENTION

Boxing machines for inserting multiple products into boxes are known. Such machines are also referred to as end of line packaging machines.

It is challenging to design a boxing machine that can operate at a high speed without frequent jams.

US 5727365A describes a method for packaging flat or stacked article groups within a packaging unit such as a paperboard carton. The method comprises the steps of supplying a stream of packaging units, for example paperboard cartons, supplying at least one stream of articles, for example beverage cans; forming at least one article group, for example a group of from six to twenty-four cans, optionally placing a support base on a top surface of the article group, and loading the article group in the packaging unit. In a stacked packaging mode a second article group is formed and loaded into the packaging unit, on top of the support base on each first article group disposed in the packaging unit. An apparatus for implementing the method is also disclosed.

### BRIEF DESCRIPTION OF VARIOUS EMBODIMENTS OF THE INVENTION

According to an aspect of the invention there is provided a boxing machine comprising:
a first boxing station;
a second boxing station;
a product conveyor extending from a product inlet to the first boxing station and from the first boxing station to the second boxing station; and
a box conveyor extending from a box inlet to the first boxing station and from the first boxing station to the second boxing station,
wherein the first boxing station is configured to insert a first set of products from the product conveyor to a sideways-oriented box on the box conveyor, and
wherein the second boxing station is configured to insert a second set of products to the sideways-oriented box on the box conveyor.

An advantage of side-filling of each box, split between two boxing stations, is that the boxing machine is able to operate at a much higher speed.

The additional optional features mentioned below further enable the boxing machine to operate at a high speed without frequent jams.

The first boxing station may be configured to insert a plurality of accumulated products, collectively defining the first set of products, into the box. The second boxing station may be configured to insert a plurality of accumulated products, collectively defining the second set of products, into the box.

The second boxing station may be configured to stack the second set of products onto the first set of products within the sideways-oriented box. A product insertion height of the second boxing station may be higher than a product insertion height of the first boxing station, so that when the box is sideways-oriented the second set of products is stacked on the first set of products and when the box is upright-oriented the second set of products is alongside the first set of products.

Each boxing station may comprise a robotic picker. The robotic picker may comprise an end effector arrangement configured to pick products from the product conveyor.

The end effector arrangement may be sized to pick a plurality of products at once. The end effector arrangement may be configured as an array. The end effector arrangement may comprise vacuum means or other effector means, such as an array of vacuum end effectors for picking a plurality of products at once.

The robotic picker may comprise a parallel manipulator. An advantage is fast and stable operation

Each boxing station may comprise a product accumulator. The product accumulator may comprise a platform between the product conveyor and the box conveyor. The robotic picker may be configured to pick at least one product from the product conveyor and place the product on the product accumulator. The picking may comprise lifting and the placing may comprise lowering. The robotic picker may be configured to assemble the respective first or second set of products on the product accumulator.

The robotic picker may be configured to pick one or more further products from the product conveyor and place the one or more further products adjacent the placed product(s) to form an array or a row or a column.

The robotic picker may be configured to stack additional products on the array or row or column, such that the first set of products is a stack and the second set of products is a stack. The stack can then be inserted into the box.

Each boxing station may comprise an inserter configured to laterally move the respective first or second set of products into the sideways-oriented box.

The inserter may be configured as a stack inserter configured to insert an entire stack of products into the box at once (e.g., in one movement). The inserter may be configured as a multiple-stack inserter configured to insert multiple adjacent stacks of products into the box at once.

The inserter may be configured to slide the respective first or second set of products into the box. The inserter may comprise a lateral pusher for pushing the respective first or second set of products laterally into the box.

The inserter may be configured to move from a starting position towards the box in a first path and then to return to the starting position in a second path bypassing a placing location of the robotic picker. This provides a speed advantage because the next sets of products can be assembled while the inserter is returning to its starting position.

The inserter may be configured to move within a channel defined by the product accumulator. The product accumulator may comprise guide portions, such as walls, defining the channel, the channel extending towards the box conveyor.

The boxing machine may comprise a control system. The control system may control various functions.

The control system may be configured to control filling of boxes with an odd number of products. In said configuration, the control system may be configured to select alternating ones of the first boxing station and the second boxing station, for each boxing cycle, to provide an additional product (the odd-numbered product) to each successive box. An advantage of the alternating selection is increased speed (when measured over multiple boxing cycles) due to the avoidance of cumulative dwell time of one of the boxing stations.

The boxing machine may comprise a box folding system configured to fold a base of the box upstream of the first boxing station and configured to fold a top of the box downstream of the second boxing station.

The product conveyor and the box conveyor may be substantially parallel to each other. The box may be oriented so that an opening of the box faces the product conveyor.

### BRIEF DESCRIPTION OF THE DRAWINGS

For a better understanding of various examples of embodiments of the present invention reference will now be made by way of example only to the accompanying drawings in which:
FIG. 1 illustrates an example plan view of a boxing machine;
FIG. 2 illustrates a perspective view of an example boxing station;
FIG. 3 illustrates an example top perspective view of a product accumulator and an inserter of a boxing station;
FIG. 4 schematically illustrates example paths of an inserter of a boxing station;
FIG. 5 schematically illustrates first and second boxing stations being configured for different product insertion heights; and
FIG. 6 schematically illustrates an example a control system for a boxing station.

### DETAILED DESCRIPTION OF VARIOUS EMBODIMENTS OF THE INVENTION

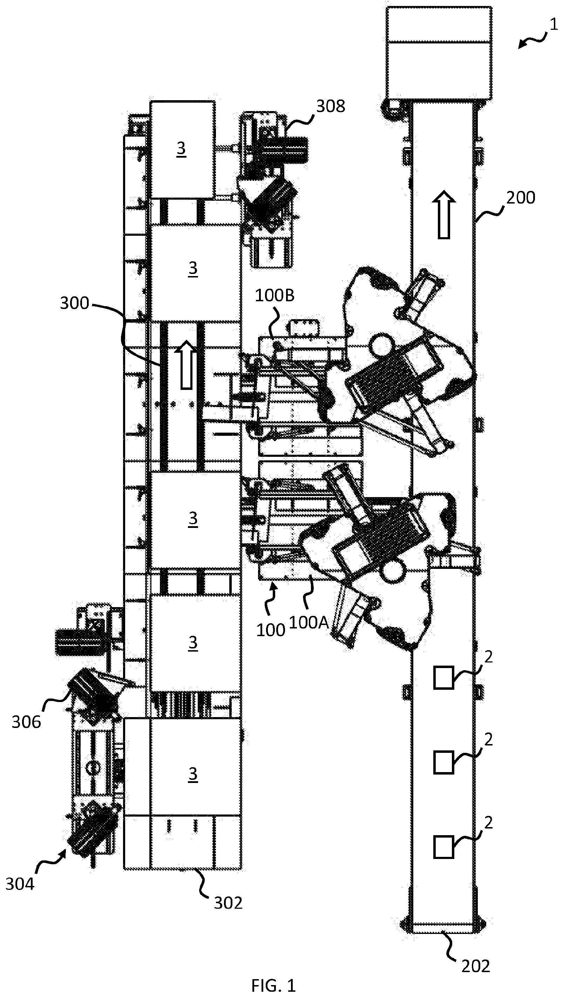

FIG. 1 illustrates an example plan view of a boxing machine 1.

The boxing machine 1 comprises a product conveyor 200, boxing stations 100 including a first boxing station 100A, a second boxing station 100B, and a box conveyor 300. The boxing stations 100 provide products 2 from the product conveyor 200 to boxes 3 on the box conveyor 300.

The product conveyor 200 may comprise a powered conveyor belt or any other appropriate conveyor.

The product conveyor 200 comprises a product inlet 202 configured to receive products 2 from an upstream process.

The product conveyor 200 extends to the first boxing station 100A which is configured to extract a first set (e.g., approximately half) of products 2 from the product conveyor 200.

The product conveyor 200 extends further to the second boxing station 100B which is configured to extract a second set (e.g., approximately half) of the products 2 from the product conveyor 200.

The second boxing station 100B, if it is the last boxing station, may be configured to extract the remainder of the products 2 from the product conveyor 200.

If any products 2 are missed by both the first and second boxing stations 100A, 100B, the products 2 may fall off an end of the product conveyor 200 into a collection container, or alternatively the product conveyor 200 could recirculate.

As shown, the box conveyor 300 may comprise a powered conveyor. The box conveyor 300 may extend in a direction substantially parallel to the product conveyor 200. The box conveyor 300 may be alongside the product conveyor 200, with the first and second boxing stations 100A, 100B therebetween. The box conveyor 300 may move boxes 3 in the same direction as products 2 moved by the product conveyor 200.

The box conveyor 300 comprises a box inlet 302 configured to receive boxes 3. The boxes 3 entering the product conveyor 200 may be fully or partially unfolded. The boxes 3 are sideways-oriented.

The box conveyor 300 may firstly extend past a base folder 306 of a box 3 folding system 304. The illustrated base folder 306 is configured to fold base flaps of each box 3 into a closed configuration. The base folder 306 may be located upstream of the first boxing station 100A. The base folder 306 may comprise a plurality of actuators, each actuator for folding a different base flap of the box 3.

The box conveyor 300 then extends to the first boxing station 100A which is configured to laterally insert the first set of products 2 into a sideways-oriented box 3. The base of the box 3 may be closed but its top flaps may still be open, leaving a sideways-oriented top opening of the box 3 through which the products 2 can be inserted.

The product conveyor 200 extends further to the second boxing station 100B which is configured to laterally insert the second set of products 2 into the sideways-oriented box 3, to complete a filling of the box 3.

The box 3 then passes along the box conveyor 300 from the second boxing station 100B to a top folder 308 of the box folding system 304. The top folder 308 is configured to fold the top flaps of the box 3 into a closed configuration, to enclose the inserted products 2 within the box 3. The top folder 308 may comprise a plurality of actuators, each actuator for folding a different top flap of the box 3.

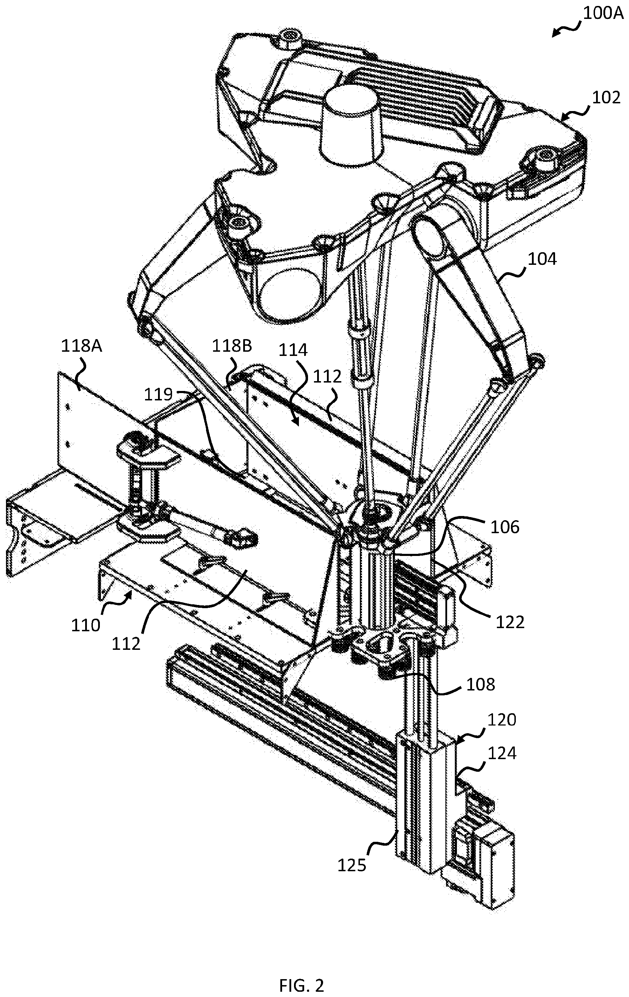

The boxing stations 100 are now described in more detail, with reference to FIGS. 2-4. These Figures illustrate the first boxing station 100A. The second boxing station 100B may have any one or more of the same features as the first boxing station 100A.

The first boxing station 100A may be configured to insert a plurality of accumulated products 2, collectively defining the first set of products 2, into the box 3. To achieve this, the first boxing station 100A comprises a robotic picker 102, a product accumulator 110, and an inserter 120. The robotic picker 102 is configured to deposit products 2 onto the product accumulator 110, and the inserter 120 is configured to insert the accumulated products 2 into the box 3.

The robotic picker 102, shown in FIG. 2, may be configured as a pick and place robot. The robotic picker 102 is configured to automatically detect the positions of products 2 on the product conveyor 200, lift the products 2 from the product conveyor 200, and lower them onto the product accumulator 110. Detection of the products 2 can be achieved by known sensing means, such as a camera.

The illustrated robotic picker 102 comprises a parallel manipulator 104 connected to an end effector arrangement 106 configured to pick products 2 from the product conveyor 200. The robotic picker 102 may be located above the product conveyor 200, between the product conveyor 200 and the product accumulator 110, with the parallel manipulator 104 facing downwards.

The parallel manipulator 104 may comprise three degrees of translational freedom. The end effector arrangement 106 may comprise a degree of rotational freedom, for rotating products 2 about a vertical axis. The parallel manipulator 104 comprises actuating arms arranged in at least a tripod. Each actuating arm may comprise hinge joints such as a shoulder joint and an elbow joint.

The end effector arrangement 106 may be sized to pick a plurality of products 2 at once. The end effector arrangement 106 may comprise a regular or irregular array of end effectors 108. The size of the array depends on how many products 2 are to be picked at once, and the product size. The array can comprise three or more rows and three or more columns of end effectors 108.

The end effector arrangement 106 may be configured to secure a top surface of the product. The end effector arrangement 106 may comprise vacuum means for attaching to the top surface. The vacuum means may comprise an array of vacuum end effectors 108. Alternatively, the end effector arrangement 106 can comprise another effector means.

The illustrated product accumulator 110 comprises a platform between the product conveyor 200 and the box conveyor 300. The robotic picker 102 is configured to assemble the set of products 2 on the product accumulator 110.

The robotic picker 102 may be configured to assemble the set of products 2 by placing a first subset of one or more products 2 on the product accumulator 110. The first subset may comprise a row or a column of products 2.

In some examples, the robotic picker 102 is then configured to pick one or more further products 2 from the product conveyor 200 and place the one or more further products 2 adjacent the already-placed product(s) to extend the row or column or to form an array of at least two rows and at least two columns.

Additionally, or alternatively, the robotic picker 102 is configured to pick one or more additional products 2 from the product conveyor 200 and stack the one or more additional products 2 onto the already-placed product(s). In this example, the assembled set of products 2 is a stack. The assembled set of products 2 may comprise a row of stacked products 2, a column of stacked products 2, or an array of stacked products 2.

The assembled set of products 2 can then be inserted into the box 3 by the inserter 120.

The illustrated inserter 120 is configured to laterally move the respective first or second set of products 2 into the sideways-oriented box 3 (not shown in FIGS. 2-3). The inserter 120 comprises a lateral pusher 122 for pushing the set of products 2 along the product accumulator 110, laterally into the opening of the sideways-oriented box 3. The lateral pusher 122 may be configured to slide the products 2 along the platform surface of the product accumulator 110 and into the box 3. The lateral pusher 122 may comprise a movable upright plate or the like.

If the set of products 2 comprises a stack of products 2, the lateral pusher 122 may be sized so that the inserter 120 functions as a stack inserter configured to insert the entire stack of products 2 into the box 3 at once (e.g., in one movement).

If the set of products 2 comprises a row, column or array of stacked products 2, the lateral pusher 122 may be sized so that the inserter 120 functions as a multiple-stack inserter configured to insert multiple adjacent stacks of products 2 into the box 3 at once.

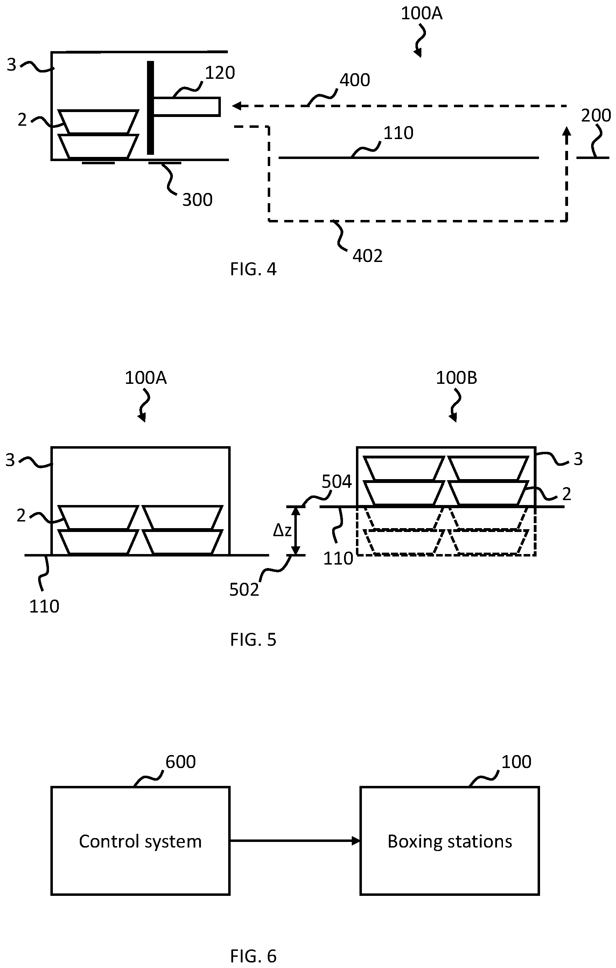

The inserter 120 further comprises an actuator arrangement 124 configured to move the lateral pusher 122. An example cyclic motion path of the lateral pusher 122 is shown in FIG. 4.

As shown in FIG. 4, the actuator arrangement 124 of the inserter 120 is configured to move the lateral pusher 122 from a starting position towards the box 3 in a first path 400. The starting position of the first path 400 is proximal to the product conveyor 200. The first path 400 extends through a placing location of the robotic picker 102. The first path 400 may terminate proximal to the box conveyor 300. The first path 400 may comprise a linear and/or approximately horizontal path.

The first path 400 may terminate inside an envelope of the box 3. The lateral pusher 122 may move through the opening of the open top flaps of the box 3. This ensures that the set of products 2 is pushed to the base of the sideways-oriented box 3.

The actuator arrangement 124 of the inserter 120 is then configured to return the lateral pusher 122 to the starting position in preparation for a next boxing cycle.

The actuator arrangement 124 may comprise an additional degree of freedom, so that the return path (second path 402) of the lateral pusher 122 is different from the first path 400. This enables the lateral pusher 122 to bypass the placing location of the robotic picker 102, so that the robotic picker 102 can assemble the set of products 2 for the next boxing cycle before the lateral pusher 122 has completed returning to the starting position.

The second path 402 may first comprise reversing the lateral pusher 122 out of the box 3, in examples in which the first path 400 terminated inside the box 3.

The second path 402 then comprises a bypass portion extending around the placing location of the robotic picker 102. The bypass portion of the second path 402 may be vertically and/or laterally offset relative to the first path 400.

In the example of FIG. 4, the bypass portion of the second path 402 is vertically offset from the first path 400. In the illustrated implementation, the bypass portion of the second path 402 is below the first path 400.

The illustrated bypass portion of the second path 402 is below the product accumulator 110 whereas the first path 400 is on (above) the product accumulator 110. Once the placing location has been passed, the lateral pusher 122 can be lifted to the starting position.

In order to facilitate the first path 400 and the second path 402 of FIG. 4, the actuator arrangement 124 of the inserter 120 can comprise two degrees of translational freedom. These comprise a horizontal degree of freedom and a vertical degree of freedom. As shown in FIGS. 2-3, the actuator arrangement 124 may comprise a horizontally slidable carriage 125 to enable the horizontal degree of freedom. The carriage 125 may comprise a vertically-movable output configured to change a vertical separation of the lateral pusher 122 from the carriage 125, to enable the vertical degree of freedom.

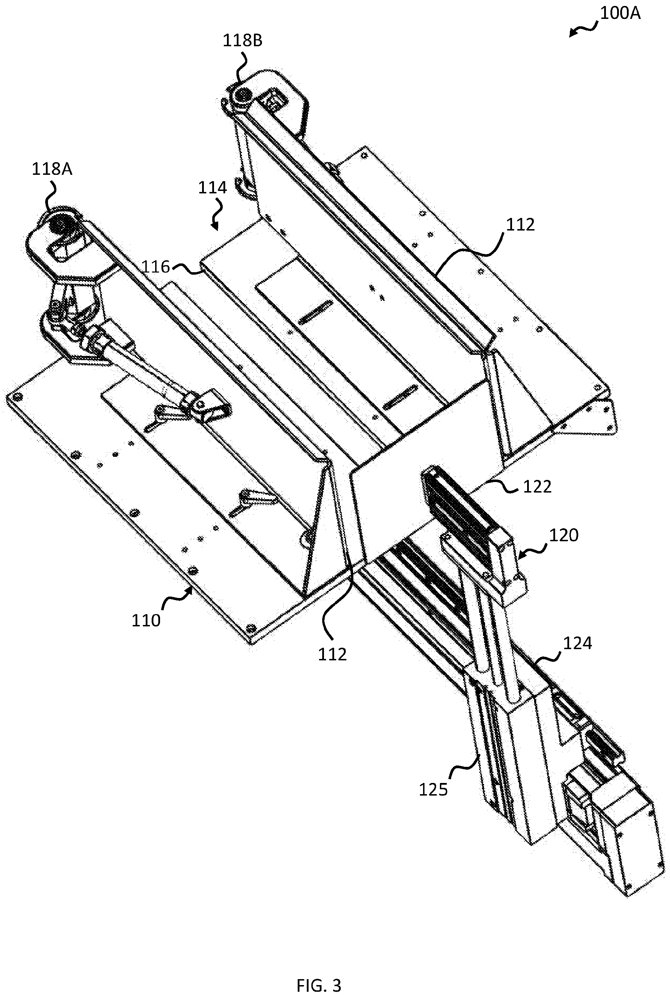

The actuator arrangement 124 and the lateral pusher 122 may be located to opposite sides of the product accumulator 110. Therefore, in order to prevent interference between the actuator arrangement 124 and the product accumulator 110, the product accumulator 110 may comprise a slot 116 as shown in FIG. 3. The path of the slot 116 depends on the direction of the first path 400 of the lateral pusher 122. The slot 116 may be linear and extends towards the box conveyor 300. The width of the slot 116 may be narrow enough that products 2 on the product accumulator 110 do not fall through the slot 116.

FIGS. 2 and 3 also illustrate the product accumulator 110 comprising guide portions 112 for constraining the set of products 2 to a channel 114 while the set of products 2 is being inserted into the box 3. The illustrated guide portions 112 comprise side guide portions such as side walls. The guide portions 112 may comprise a guide portion 112 to each side of the slot 116. The width separation of the guide portions 112 depends on the width of the set of products 2 and/or the dimensions of the box 3. The width separation may be adjustable.

FIG. 2 also illustrates deployable top flap holders 118A, 118B configured to hold open the top flaps of the box 3 while the products 2 are inserted into the box 3. The top flap holders 118A, 118B can comprise a first top flap holder 118A for holding open a first top flap of the box 3 and a second top flap holder 118B for holding open a second top flap of the box 3.

The top flap holders 118A, 118B may each comprise a hinged member. The hinged members may be mounted to the guide portions 112 of the product accumulator 110. The hinged members may be swung open in opposite directions by their respective actuators, to engage with top flaps of the box 3 to hold the top flaps open.

In some examples, each top flap holder 118A, 118B also comprises a floor portion 119, so that when the top flap holders 118A, 118B are swung open the floor portions 119 create a bridge between the product accumulator 110 and the box 3.

Once the operation of the first boxing station 100A is complete, the box 3 moves downstream along the box conveyor 300 from the first boxing station 100A to the second boxing station 100B, until the box 3 is aligned with the second boxing station 100B, and then the second boxing station 100B inserts the second set of products 2 into the box 3 that already contains the first set of products 2. As mentioned previously, the second boxing station 100B may comprise the same features as the first boxing station 100A. Some differences of the second boxing station 100B are described below.

Referring to FIG. 5, the second boxing station 100B can be configured to stack the second set of products 2 onto the first set of products 2 within the sideways-oriented box 3. The second set of products 2 then rests on the first set of products 2 within the sideways-oriented box 3 (i.e., the sets of products 2 are side-by-side when the box 3 is upright). In order to facilitate stacking of the second set of products 2 on the first set of products 2, a product insertion height 504 of the second boxing station 100B may be higher than a product insertion height 502 of the first boxing station 100A.

The product insertion height 502, 504 may be defined, at least in part, by the height of the product accumulator 110. The difference in product insertion heights 502, 504 may be configurable by an operator, to suit the product and box dimensions. The inserter 120 and the robotic picker 102 may be height-adjustable.

FIG. 6 schematically illustrates an example of a control system 600. The control system 600 may control various functions of the boxing stations 100. Some control aspects are known or outside the scope of this disclosure.

The control system 600 may comprise one or more controllers. The controllers may belong to the separate actuators/robots and there may or may not be a central controller for centrally controlling functions of the boxing machine 1. Each controller may comprise a processor, memory and computer program code.

The control system 600 may be configured to enable the split filling of the box 3. This includes, for example, controlling the robotic picker 102 of the first boxing station 100A to pick a subset of the products 2 on the product conveyor 200, so that some products 2 pass through to the second boxing station 100B.

In some use cases, the proportions of products 2 picked by the first boxing station 100A and the second boxing station 100B may be split approximately 50/50.

In some examples, an operator may wish to fill a box 3 with an odd number of products 2. This means that one boxing station (e.g., first boxing station 100A) will pick, place and insert an additional product compared to the other boxing station (e.g., second boxing station 100B). As a result, the second boxing station 100B would dwell as it waits for the first boxing station 100A to complete. In order to avoid dwell, the control system 600 may be configured in an 'odd filling' configuration.

In the odd filling configuration, the control system 600 may be configured to alternate which one of the boxing stations 100 picks an additional product. In other words, the control system 600 selects alternating ones of the first boxing station 100A and the second boxing station 100B, for each boxing cycle, to provide the additional product (the odd-numbered product) to each successive box 3.

Although embodiments of the present invention have been described in the preceding paragraphs with reference to various examples, it should be appreciated that modifications to the examples given can be made without departing from the scope of the invention as claimed. Although the illustrated embodiment enables filling of up to 20 boxes per minute/insertion of up to 120 products per minute, speed and/or precision may not be as important in some implementations. For example:
- the robotic picker 102 could be replaced with a different means for transferring a product to the product accumulator 110, such as a pusher or any other appropriate means;
- the inserter 120 could be replaced with a different means for transferring a product to a box 3, such as a product accumulator tilting device or any other appropriate means.
- the robotic picker 102 and the inserter 120 could be merged into a single device for transferring products 2 from the product conveyor 200 to the box 3, optionally without a product accumulator 110.

Features described in the preceding description may be used in combinations other than the combinations explicitly described.

Although functions have been described with reference to certain features, those functions may be performable by other features whether described or not. Although features have been described with reference to certain embodiments, those features may also be present in other embodiments whether described or not.

## Claims

1. A boxing machine (1) comprising:
a first boxing station (100A);
a second boxing station (100B);
a product conveyor (200) extending from a product inlet (202) to the first boxing station and from the first boxing station to the second boxing station; and
a box conveyor (300) extending from a box inlet (302) to the first boxing station and from the first boxing station to the second boxing station,
wherein the first boxing station is configured to insert a first set of products (2) from the product conveyor to a sideways-oriented box (3) on the box conveyor, and
wherein the second boxing station is configured to insert a second set of products to the sideways-oriented box on the box conveyor.

2. The boxing machine of claim 1, wherein the first boxing station is configured to insert a plurality of accumulated products, collectively defining the first set of products, into the sideways-oriented box, and wherein the second boxing station is configured to insert a plurality of accumulated products, collectively defining the second set of products, into the sideways-oriented box.

3. The boxing machine of claim 1 or 2, wherein the second boxing station is configured to stack the second set of products onto the first set of products within the sideways-oriented box.

4. The boxing machine of claim 3, wherein a product insertion height (504) of the second boxing station is higher than a product insertion height (502) of the first boxing station, so that when the box is sideways-oriented the second set of products is stacked on the first set of products and when the box is upright-oriented the second set of products is alongside the first set of products.

5. The boxing machine of any preceding claim, wherein each boxing station comprises a robotic picker (102), wherein the robotic picker comprises an end effector arrangement (106) configured to pick products from the product conveyor, and wherein the end effector arrangement is sized to pick a plurality of products at once.

6. The boxing machine of claim 5, wherein each boxing station comprises a product accumulator (110), wherein the product accumulator comprises a platform between the product conveyor and the box conveyor

7. The boxing machine of claim 6, wherein the robotic picker is configured to pick at least one product from the product conveyor and place the at least one product on the product accumulator, and wherein the robotic picker is configured to assemble the respective first or second set of products on the product accumulator.

8. The boxing machine of any preceding claim, wherein each boxing station comprises an inserter (120) configured to laterally move the respective first or second set of products into the sideways-oriented box.

9. The boxing machine of claim 8, wherein the inserter is configured as a stack inserter configured to insert an entire stack of products into the sideways-oriented box in one movement.

10. The boxing machine of claim 9, wherein the inserter is configured as a multiple-stack inserter configured to insert multiple adjacent stacks of products into the sideways-oriented box at once.

11. The boxing machine of claim 8, 9, or 10, wherein the inserter is configured to slide the respective first or second set of products into the sideways-oriented box, and/or wherein the inserter is configured to move from a starting position towards the sideways-oriented box in a first path (400) and then to return to the starting position in a second path (402) bypassing a placing location of the robotic picker.

12. The boxing machine of any one of claims 8 to 11, as dependent through claim 6, wherein the inserter is configured to move within a channel (114) defined by the product accumulator.

13. The boxing machine of any preceding claim, comprising a control system (600), wherein the control system is configured to control filling of boxes with an odd number of products, wherein in said configuration, the control system is configured to select alternating ones of the first boxing station and the second boxing station, for each boxing cycle, to provide an additional product to each successive sideways-oriented box.

14. The boxing machine of any preceding claim, wherein the boxing machine comprises a box folding system (304) configured to fold a base of the box upstream of the first boxing station and configured to fold a top of the box downstream of the second boxing station.

15. The boxing machine of any preceding claim, wherein the product conveyor and the box conveyor are substantially parallel to each other, arranged such that an opening of the sideways-oriented box faces the product conveyor in use.

## Patentansprüche

1. Verpackungsmaschine (1), umfassend:
eine erste Verpackungsstation (100A);
eine zweite Verpackungsstation (100B);
einen Produktförderer (200), der sich von einem Produkteinlass (202) zu der ersten Verpackungsstation und von der ersten Verpackungsstation zu der zweiten Verpackungsstation erstreckt; und
einen Kartonförderer (300), der sich von einem Kartoneinlass (302) zu der ersten Verpackungsstation und von der ersten Verpackungsstation zu der zweiten Verpackungsstation erstreckt,
wobei die erste Verpackungsstation dazu konfiguriert ist, einen ersten Satz von Produkten (2) von dem Produktförderer in einen seitwärts orientierten Karton (3) auf dem Kartonförderer einzuführen, und
wobei die zweite Verpackungsstation dazu konfiguriert ist, einen zweiten Satz von Produkten in den seitwärts orientierten Karton auf dem Kartonförderer einzuführen.

2. Verpackungsmaschine nach Anspruch 1, wobei die erste Verpackungsstation dazu konfiguriert ist, eine Vielzahl von angesammelten Produkten, die gemeinsam den ersten Satz von Produkten definieren, in den seitwärts orientierten Karton einzuführen, und wobei die zweite Verpackungsstation dazu konfiguriert ist, eine Vielzahl von angesammelten Produkten, die gemeinsam den zweiten Satz von Produkten definieren, in den seitwärts orientierten Karton einzuführen.

3. Verpackungsmaschine nach Anspruch 1 oder 2, wobei die zweite Verpackungsstation dazu konfiguriert ist, den zweiten Satz von Produkten auf den ersten Satz von Produkten innerhalb des seitwärts orientierten Kartons zu stapeln.

4. Verpackungsmaschine nach Anspruch 3, wobei eine Produkteinführungshöhe (504) der zweiten Verpackungsstation höher als eine Produkteinführungshöhe (502) der ersten Verpackungsstation ist, so dass, wenn der Karton seitwärts orientiert ist, der zweite Satz von Produkten auf dem ersten Satz von Produkten gestapelt wird und, wenn der Karton aufrecht ausgerichtet ist, sich der zweite Satz von Produkten neben dem ersten Satz von Produkten befindet.

5. Verpackungsmaschine nach einem vorhergehenden Anspruch, wobei jede Verpackungsstation einen Roboter-Picker (102) umfasst, wobei der Roboter-Picker eine Endeffektor-Anordnung (106) umfasst, die dazu konfiguriert ist, Produkte von dem Produktförderer zu entnehmen, und wobei die Endeffektor-Anordnung so bemessen ist, dass sie eine Vielzahl von Produkten auf einmal entnimmt.

6. Verpackungsmaschine nach Anspruch 5, wobei jede Verpackungsstation einen Produktspeicher (110) umfasst, wobei der Produktspeicher eine Plattform zwischen dem Produktförderer und dem Kartonförderer umfasst.

7. Verpackungsmaschine nach Anspruch 6, wobei der Roboter-Picker dazu konfiguriert ist, mindestens ein Produkt von dem Produktförderer zu entnehmen und das mindestens eine Produkt auf den Produktspeicher zu legen, und wobei der Roboter-Picker dazu konfiguriert ist, den jeweiligen ersten oder zweiten Satz von Produkten auf dem Produktspeicher zusammenzubauen.

8. Verpackungsmaschine nach einem vorhergehenden Anspruch, wobei jede Verpackungsstation einen Einleger (120) umfasst, der dazu konfiguriert ist, den jeweiligen ersten oder zweiten Satz von Produkten seitlich in den seitwärts orientierten Karton zu bewegen.

9. Verpackungsmaschine nach Anspruch 8, wobei der Einleger als ein Stapel-Einleger konfiguriert ist, der dazu konfiguriert ist, einen gesamten Stapel von Produkten in einer Bewegung in den seitwärts orientierten Karton einzuführen.

10. Verpackungsmaschine nach Anspruch 9, wobei der Einleger als ein Mehrfachstapel-Einleger konfiguriert ist, der dazu konfiguriert ist, mehrere benachbarte Stapel von Produkten gleichzeitig in den seitwärts orientierten Karton einzuführen.

11. Verpackungsmaschine nach Anspruch 8, 9 oder 10, wobei der Einleger dazu konfiguriert ist, den jeweiligen ersten oder zweiten Satz von Produkten in den seitwärts orientierten Karton zu schieben, und/oder wobei der Einleger dazu konfiguriert ist, sich von einer Ausgangsposition in Richtung des seitwärts orientierten Kartons in einem ersten Pfad (400) zu bewegen und dann in einem zweiten Pfad (402) unter Umgehung eines Platzierungsorts des Roboter-Pickers in die Ausgangsposition zurückzukehren.

12. Verpackungsmaschine nach einem der Ansprüche 8 bis 11, wenn abhängig von Anspruch 6, wobei der Einleger dazu konfiguriert ist, sich innerhalb eines Kanals (114) zu bewegen, der durch den Produktspeicher definiert ist.

13. Verpackungsmaschine nach einem vorhergehenden Anspruch, umfassend ein Steuersystem (600), wobei das Steuersystem dazu konfiguriert ist, das Füllen von Kartons mit einer ungeraden Anzahl von Produkten zu steuern, wobei in der Konfiguration das Steuersystem dazu konfiguriert ist, abwechselnd die erste Verpackungsstation und die zweite Verpackungsstation für jeden Verpackungszyklus auszuwählen, um jedem aufeinanderfolgenden seitwärts orientierten Karton ein zusätzliches Produkt bereitzustellen.

14. Verpackungsmaschine nach einem vorhergehenden Anspruch, wobei die Verpackungsmaschine ein Kartonfaltsystem (304) umfasst, das dazu konfiguriert ist, eine Basis des Kartons stromaufwärts der ersten Verpackungsstation zu falten, und dazu konfiguriert ist, eine Oberseite des Kartons stromabwärts der zweiten Verpackungsstation zu falten.

15. Verpackungsmaschine nach einem vorhergehenden Anspruch, wobei der Produktförderer und der Kartonförderer im Wesentlichen parallel zueinander sind und so angeordnet sind, dass eine Öffnung des seitwärts orientierten Kartons im Gebrauch dem Produktförderer zugewandt ist.

## Revendications

1. Machine de mise en carton (1) comprenant :
un premier poste de mise en carton (100A) ;
un second poste de mise en carton (100B) ;
un transporteur de produits (200) s'étendant d'une entrée de produits (202) au premier poste de mise en carton et du premier poste de mise en carton au second poste de mise en carton ; et
un transporteur de cartons (300) s'étendant d'une entrée de cartons (302) au premier poste de mise en carton et du premier poste de mise en carton au second poste de mise en carton,
ledit premier poste de mise en carton étant conçu pour insérer un premier ensemble de produits (2) du transporteur de produits à un carton orienté latéralement (3) sur le transporteur de cartons, et
ledit second poste de mise en carton étant conçu pour insérer un second ensemble de produits dans le carton orienté latéralement sur le transporteur de cartons.

2. Machine de mise en carton selon la revendication 1, ledit premier poste de mise en carton étant conçu pour insérer une pluralité de produits accumulés, définissant collectivement le premier ensemble de produits, dans le carton orienté latéralement, et ledit second poste de mise en carton étant conçu pour insérer une pluralité de produits accumulés, définissant collectivement le second ensemble de produits, dans le carton orienté latéralement.

3. Machine de mise en carton selon la revendication 1 ou 2, ledit second poste de mise en carton étant conçu pour empiler le second ensemble de produits sur le premier ensemble de produits à l'intérieur du carton orienté latéralement.

4. Machine de mise en carton selon la revendication 3, la hauteur d'insertion de produits (504) du second poste de mise en carton étant supérieure à la hauteur d'insertion de produits (502) du premier poste de mise en carton, de sorte que lorsque le carton est orienté latéralement, le second ensemble de produits est empilé sur le premier ensemble de produits et lorsque le carton est orienté verticalement, le second ensemble de produits se trouve à côté du premier ensemble de produits.

5. Machine de mise en carton selon l'une quelconque des revendications précédentes, chaque poste de mise en carton comprenant un dispositif de saisie robotique (102), ledit dispositif de saisie robotique comprenant un agencement d'effecteur terminal (106) conçu pour prélever des produits à partir du transporteur de produits, et ledit agencement d'effecteur terminal étant dimensionné pour prélever plusieurs produits à la fois.

6. Machine de mise en carton selon la revendication 5, chaque poste de mise en carton comprenant un dispositif d'accumulation de produits (110), ledit dispositif d'accumulation de produits comprenant une plateforme entre le transporteur de produits et le transporteur de cartons.

7. Machine de mise en carton selon la revendication 6, ledit dispositif de saisie robotique étant conçu pour prélever au moins un produit à partir du transporteur de produits et placer ledit au moins un produit sur le dispositif d'accumulation de produits, et ledit dispositif de saisie robotique étant conçu pour assembler le premier ou le second ensemble respectif de produits sur le dispositif d'accumulation de produits.

8. Machine de mise en carton selon l'une quelconque des revendications précédentes, chaque poste de mise en carton comprenant un dispositif d'insertion (120) conçu pour déplacer latéralement le premier ou le second ensemble respectif de produits dans le carton orienté latéralement.

9. Machine de mise en carton selon la revendication 8, ledit dispositif d'insertion étant conçu comme un dispositif d'insertion de pile conçu pour insérer une pile entière de produits dans la boîte orientée latéralement en un seul mouvement.

10. Machine de mise en carton selon la revendication 9, ledit dispositif d'insertion étant conçu comme un dispositif d'insertion à plusieurs piles conçu pour insérer plusieurs piles adjacentes de produits à la fois dans le carton orienté latéralement.

11. Machine de mise en carton selon la revendication 8, 9 ou 10, ledit dispositif d'insertion étant conçu pour faire glisser le premier ou le second ensemble respectif de produits dans le carton orienté latéralement, et/ou ledit dispositif d'insertion étant conçu pour se déplacer d'une position de départ vers la boîte orientée latéralement dans un premier trajet (400), puis pour revenir à la position de départ dans un second trajet (402) contournant un emplacement de placement du dispositif de saisie robotique.

12. Machine de mise en carton selon l'une quelconque des revendications 8 à 11, lorsqu'elle dépendant de la revendication 6, ledit dispositif d'insertion étant conçu pour se déplacer à l'intérieur d'un canal (114) défini par le dispositif d'accumulation de produit.

13. Machine de mise en carton selon l'une quelconque des revendications précédentes, comprenant un système de commande (600), ledit système de commande étant conçu pour commander le remplissage de cartons avec un nombre impair de produits, dans ladite configuration, ledit système de commande étant conçu pour sélectionner alternativement un poste parmi le premier poste de mise en carton et le second poste de mise en carton, pour chaque cycle de mise en carton, afin de fournir un produit supplémentaire à chaque carton orienté latéralement successif.

14. Machine de mise en carton selon l'une quelconque des revendications précédentes, ladite machine de mise en carton comprenant un système de pliage de carton (304) conçu pour plier la base du carton en amont du premier poste de mise en carton et conçu pour plier le dessus du carton en aval du second poste de mise en carton.

15. Machine de mise en carton selon l'une quelconque des revendications précédentes, ledit transporteur de produits et ledit transporteur de cartons étant sensiblement parallèles l'un à l'autre, agencés de sorte qu'une ouverture du carton orienté latéralement fasse face au transporteur de produits lors de l'utilisation.
